# EUROPEAN PATENT SPECIFICATION

(11) **EP 4 360 929 B1**
(45) Date of publication and mention of the grant of the patent: **09.07.2025**
(21) Application number: 23472005.0
(22) Date of filing: 27.07.2023
(51) Int. Cl.: B60K 35/00, B60K 37/00

(54) **EXTERNAL ROTARY CONTROLLER FOR A VEHICLE**
EXTERNE DREHSTEUERUNG FÜR EIN FAHRZEUG
DISPOSITIF DE COMMANDE ROTATIF EXTERNE POUR UN VÉHICULE

(43) Date of publication of application: 01.05.2024
(73) Proprietor: Enhance Ltd, 1113 Sofia (BG)
(72) Inventor: Stoimenov, Dimitar Nikolov, 1756 Sofia (BG)
(74) Representative: Benatov, Samuil Gabriel

(56) References cited:
- EP-A1- 1 437 753
- DE-U1- 202012 001 316

## Description

### TECHNICAL FIELD AND APPLICABILITY OF THE INVENTION

This invention relates to an external control device configured for interaction with a modem vehicle and activation of different functions in a non-distracting manner, and to a system comprising such external control device. It specifies particularly how a new combination of already existing user interface methods and devices can be used to improve the user experience.

### BACKGROUND OF THE INVENTION

Safety is most important when it comes to vehicles and the way people interact with them. Controlling different features of the vehicle while driving without distracting the driver's attention to the road is crucial for safe drives. Some vehicle manufacturers choose Design over Function and tend to lower the importance of the seamless and less distracting interaction with the car. Changing some basic functions like opening the glovebox, controlling the wipers, changing the driving modes, and more often requires several steps to execute and steal the driver's attention from the road to the touchscreen for example.

The invention applies to all vehicles lacking an additional controlling device for different functions. The invention aims to provide easy access for the user to control different functions without taking his eyes off the road.

Most vehicles already have some kind of rotary controller integrated into the central console for controlling different functions but the functionality they provide is very limited and cannot be customized in different ways in order to match the driver habits and preferences.

The document EP 1 437 753 A1 discloses a vehicle control device comprising a housing (14) with at least one rotary encoder, at least one display, and a control unit with a control logic module.

### SUMMARY OF THE INVENTION

It is an object of the present invention to provide an external control device and system for activation and controlling different systems in a vehicle.

The above-mentioned aim is achieved by the subject-matter of the present claim 1, by creating an external control device configured to be connected with the central control unit of a vehicle and able to receive data from and to send control signals to said central control unit. The external control device according the invention comprises a housing with at least one rotary encoder, at least one display, at least one shortcut button, a control unit with a control logic module, a power module.

The logic module is configured to operate the device in two modes:
- Home Menu Mode in which the logic module is configured at rotation of said at least one rotary encoder to change functionality of said at least one shortcut button that activates one of plurality pre-configured features of the vehicle when pressed;
- Function Mode to be switched on by pressing of said at least one shortcut button in the Home Menu Mode for activation of said pre-configured feature of the vehicle, wherein the logic module is configured to adjust said feature of the vehicle at rotation clockwise and counterclockwise of said at least one rotary encoder.

Said at least one display is configured to receive from the control unit and display information for at least one of the following: current configuration of said at least one shortcut button in Home Menu Mode; current status of the activated pre-configured feature of the car and adjusting and changing status of activated pre-configured feature of the car by rotating clockwise and counterclockwise of said at least one rotary encoder Function Mode.

The control unit comprises a microcontroller with Bluetooth and/or WiFi connectivity. Logic module is a software program, running on the microcontroller, which controls all other modules and handles all the communication of the device.

The rotary encoder can be designed as a shortcut button too, wherein this additional function can be achieved by pressing or pulling of the rotary encoder.

The shortcut buttons can be physical buttons, for example, microswitches or tact switches for selecting a desired function of the car. Such buttons give tactile feedback when pressed. The buttons can be also capacitive with additional haptic feedback module which makes small vibrations when a button is pressed.

The display can be for example LCD or OLED display. The display can be combined with the rotary encoder and arranged inside the rotation circle of the rotary encoder.

The power module can be autonomous, for example, with batteries, and/or can have USB-A or USB-C socket for connecting to the electric system of the car or to the external power source.

In a preferred embodiment the vehicle is a car.

### BREIF DESCRIPTION OF THE FIGURES

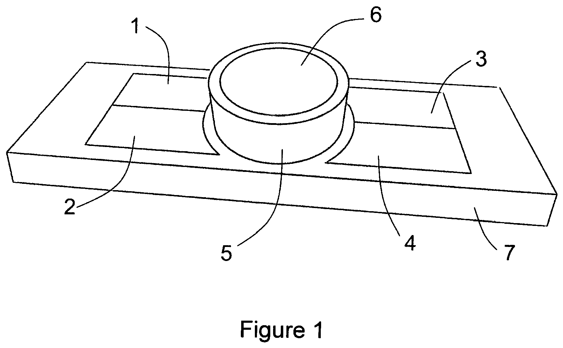

Hereinafter, the external control device and the control system subject of the invention are explained by preferred embodiments, given as non-exhaustive examples, with reference to the accompanying figure 1, that is a schematic view of one embodiment of the claimed external control device with four buttons.

### EXAMPLES OF EMBODIMENTS AND OPERATION OF THE INVENTION

The external control device according to the present invention has a housing 7 with at least one rotary encoder 5, at least one display 6, and at least one shortcut button 1, 2, 3, 4 that activates different functions of the vehicle (features).

Each shortcut button 1, 2, 3, 4 activates a pre-configured feature of the vehicle when pressed.

Pressing or pulling the rotary encoder 5 might or might not be considered a shortcut button too.

Once a feature is selected by a shortcut button, the rotary encoder 5 allows the user to adjust the selected feature by clockwise and counterclockwise rotation.

By default, the display 6 shows the current configuration of all shortcut buttons 1, 2, 3, 4.

The configuration of all buttons 1, 2, 3, 4 can be changed by rotating the encoder 5. There might be one or more configurations for all the shortcut buttons with different features.

If the end of all available configurations' selection is reached by rotating the encoder vibrating feedback might or might not be sent to notify the user.

The external control device has two main modes - Home Menu Mode and Function Mode.
- Home Menu Mode - this is the default mode which loads after starting the device. The logic module assigns default function/feature for all shortcut buttons (shortcut buttons configuration is a set of pre-defined shortcuts for different features assigned to each button of the device). The assigned function of each button is shown on the display after an instruction is sent from the microcontroller to the display to show the current shortcut buttons configuration. If the functions/features are more than the shortcut buttons the software can group the functions in different pages. Each page has as many functions as the number of the shortcut buttons. By rotating the encoder clockwise and counterclockwise user can change the currently selected page. This will trigger the software program to change the function of all buttons accordingly and send a command to show the current configuration on the Display.
- Function Mode - user can switch to Function Mode by pressing one of the shortcut buttons in the Home Menu Mode in order to choose the feature of the vehicle which is currently under control of the rotary encoder. The number of the Function Modes can be as much as the shortcut buttons or even more. The logic module will switch the device logic to the assigned Function Mode as soon as a physical button is pressed. By rotating the encoder clockwise and counterclockwise the logic module will change the current value for the chosen feature of the vehicle and show the new value on the display. To go back to Home Menu Mode the user can press one of the shortcut buttons again and the logic module will switch the device to Home Menu Mode and show the current home page and shortcut buttons functions on the display.

In the embodiment of the invention in which the external control device is intended to be mounted in a car, the external form of the housing of the external control device is adapted to be nested in an existing open space in the car's interior in operating proximity to the driver. Such a space can be a glove compartment.

Also, the external form of the housing of the external control device can be adapted to be seemingly integrated into a central console storage compartment. In a specific case the device can fit between the cup-holder and door blind in the Central Console without disturbing the esthetics of the car and ergonomically fitting in the right spot for easy and convenient reach with one hand. When the device is installed the door blind will not close fully but it will look natural.

In an alternative variant the external control device can be made in a way to fit inside the cup-holder of the vehicle utilizing even bigger number of vehicles (for example vehicle missing the door blind mechanism).

The external control device can comprise also a haptic feedback module - a motor which vibrates at specified frequency in order to produce an indication in different important events (e.g. when the end of a list is reached, when a button is pressed or when a function changes its state).

In a preferred embodiment, if the end of possible adjustments for the selected feature is reached, haptic feedback might be sent to the user from a small vibration module integrated into the base of the device to notify the user of the current state of the feature without the need to take his eyes off the road.

The pre-configured features of the vehicle are vehicle systems and can be selected between but not limited to the following:
- Cabin temperature;
- HVAC fan Speed;
- Rear fan speed;
- Seats cooling;
- Multimedia volume;
- Wipers' speed;
- Acceleration mode;
- Regenerative braking mode;
- Autopilot set speed;
- Opening the glovebox;
- Battery preheating;
- Hazard lights activation;
- Folding the mirrors;
- Dome lights control.

Some of the listed features have two extreme positions, for example: "Opening the glovebox" - open and close, or "Folding the mirrors" - folded and unfolded. These features can be controlled only by pushing the shortcut button. Other features need to be adjusted by setting value of the feature, for example: "Cabin temperature" -temperature value, "Autopilot set speed" - speed value, other "speed" features - speed degree (1, 2, 3, 4, etc.), "Regenerative braking mode" 50% or 100%, "Acceleration mode" - Eco or Sport, etc. The adjustment of said values is controlled by the rotation of the rotary encoder clockwise and counterclockwise after activation of the feature/system by the shortcut button.

The external control device can be connected to the vehicle in different ways separately and independently from each other or all together at once, for example:
1. With a direct wired connection to the vehicle network which gives access for communications with all other modules in the vehicle. For example, via a communication port for connecting to a CAN bus of a vehicle.
2. With a wireless connection to an additional OBD device which itself is connected to the vehicle for accessing the vehicle network. The additional device will act as a gateway between the wirelessly connected Rotary Controller and physical connection to the other modules.
3. With a wireless connection to the Cloud/Internet which gives access to the vehicle functions remotely. For example, the external control device is connected via a mobile device (the mobile phone of the user with an installed special application) to a remote server that controls the vehicle.

An embodiment with two rotary controllers will work in a similar way to the embodiment with one rotary controller. Each rotary controller will have its own HOME menu and its own Shortcut buttons configuration. The two rotary controllers work separately one from the other and doesn't interfere with the functionality of the other. The functions and menus do not overlap between the two home screens in order to avoid collisions and synchronization issues. In this case the first rotary controller to request a function to the car wins (the priority of execution goes to the first which requested the feature change). The presence of the second rotary controller allows simultaneous controlling of two features of the vehicle.

Example configuration of the external control device according to the invention.
- Rotary controller with OLED display in the center and rotary encoder which can be rotated clockwise, counterclockwise or pushed down for confirmation or other actions
- four shortcut buttons, two on each side of the rotary controller
- The device has 2 working modes: Home Menu Mode and Function Mode.
- There are 3 Home Screen pages, which activates different button configurations for example:
   o Home Screen 1:
      ▪ Center button: Activate Temperature Function
      ▪ Left Top button: Activate Fan Speed Function
      ▪ Left Bottom button: Activate Left Seat Heating Function
      ▪ Right Top button: Activate Rear Fan Speed Function
      ▪ Right Bottom button: Activate Right Seat Heating Function
   o Home Screen 2:
      ▪ Center button: Activate Preconditioning Function
      ▪ Left Top button: Activate Regenerative Braking Function
      ▪ Left Bottom button: Activate Acceleration Mode Function
      ▪ Right Top button: Activate Volume Function
      ▪ Right Bottom button: Activate Wipers Function
   o Home Screen 3:
      ▪ Center button: Activate Autopilot Function
      ▪ Left Top button: Activate Glovebox Function
      ▪ Left Bottom button: Activate Fold Mirrors Function
      ▪ Right Top button: Activate Dome Lights Function
      ▪ Right Bottom button: Activate Thank You Function
- The rotary controller is configured to change between the 3 Home Screen pages when rotated clockwise and counterclockwise.
- When a button is pressed while one of the Home Screens is displayed the corresponding function of the car will be activated.
- When the rotary controller is rotated the chosen function will be adjusted to a desired value. For example, if Left Bottom button is pressed, when Home Screen 1 is visible, the function Left Seat Heating will be activated and in Function Mode by rotating the rotary controller the Seat Heating will be controlled between on different levels for example -3, -2, -1, 0, +1, +2, +3.
- By pressing the rotary controller in the center, the Home screen will return and user can select a new function.

The control system according the invention comprises:
- a central control unit (central computer) of the vehicle, which monitors all commands and translates them to a corresponding control module of a vehicle system;
- vehicle network which allows the communication between the central control unit all the control modules of the vehicle and connects them together;
- several vehicle systems (features) controlled by the central control unit of the vehicle, selected between but not limited to the abovementioned vehicle systems. Said vehicle systems having control modules or actuators which receive commands from the central control unit via the vehicle network and enable, move, or change different features of the vehicle accordingly;
- an external control device according to the invention connected to the control unit of the vehicle and configured to receive information from and to send control signals/commands to the central control unit to control said selected vehicle systems.

## Claims

1. Vehicle external control device comprising a housing (1) with at least one rotary encoder (5), at least one display (6), at least one shortcut button (1, 2, 3, 4), a control unit with a control logic module and a power module, wherein each shortcut button (1, 2, 3, 4) is configured to activate one of plurality pre-configured features of a vehicle when pressed, and the logic module of the control unit is configured to operate the device in two modes:
- Home Menu Mode in which the logic module is configured at rotation of said at least one rotary encoder (5) to change functionality of said at least one shortcut button (1, 2, 3, 4) that activates one of plurality pre-configured features of a vehicle when pressed,
- Function Mode to be switched on by pressing said at least one shortcut button (1, 2, 3, 4) in the Home Menu Mode for activation of said pre-configured feature of the vehicle, wherein in the Function Mode the logic module is configured to control one or more of the pre-configured features of the vehicle and/or to adjust said one or more of the pre-configured features of the vehicle at rotation clockwise or counterclockwise of said at least one rotary encoder (5),
wherein said at least one display is configured to receive from the control unit and display information for at least one of the following: current configuration of said at least one shortcut button in Home Menu Mode; current status of the activated pre-configured feature of the vehicle and/or adjusting and changing status of activated pre-configured feature of the car by rotating clockwise or counterclockwise of said at least one rotary encoder (5) in Function Mode.

2. Vehicle external control device according to claim 1, **characterizing in that** the rotary encoder (5) is also configured as a shortcut button, wherein shortcut button function is activated by pressing or pulling of the rotary encoder (5).

3. Vehicle external control device according to claims 1 or 2, **characterizing in that** the control unit comprises means for Bluetooth and/or WiFi connectivity.

4. Vehicle external control device according to claims 1, 2 or 3, **characterizing in that** it further comprises a haptic feedback module connected to the control unit, wherein the control logic module is configured to activate the haptic feedback module upon occurrence of a predetermined event.

5. Vehicle external control device according any of the preceding claims, **characterizing in that** the device has one rotary encoder (5) combined with one OLED display (6) arranged centrally in the rotary encoder (5), and four shortcut buttons (1, 2, 3, 4) arranged around the rotary encoder (5).

6. Vehicle external control device according any of the preceding claims, **characterizing in that** the vehicle is a car.

7. Vehicle control system comprising:
- a central control unit of the vehicle, configured to monitor commands and to translates them to a corresponding control module or actuator of a vehicle system;
- vehicle network which allows the communication between the central control unit and said control modules or actuators of the vehicle systems and connects them together;
- plurality of vehicle systems controlled by the central control unit of the vehicle, said vehicle systems having control modules or actuators configured to receive commands from the central control unit via the vehicle network to enable, move, or change different features of the vehicle accordingly;
- an external control device according to any of claims 1 to 6 connected to the control unit of the vehicle and configured to receive information from and to send control signals/commands to the central control unit to control said vehicle systems.

## Patentansprüche

1. Externes Fahrzeugsteuergerät, bestehend aus einem Gehäuse (1) mit mindestens einem Drehgeber (5), mindestens einem Display (6), mindestens einer Schnelltaste (1, 2, 3, 4), einer Steuereinheit mit einem Steuerlogikmodul und einem Leistungsmodul, wobei jede Schnelltaste (1, 2, 3, 4) konfiguriert ist, um durch Drücken eine von mehreren vorkonfigurierten Fahrzeugfunktionen zu aktivieren und das Logikmodul der Steuereinheit konfiguriert ist, um das Gerät in zwei Modi zu betreiben:
- Home-Menü-Modus: Das Logikmodul ist so konfiguriert, dass es durch Drehen des genannten mindestens einen Drehgebers (5) die Funktionalität der genannten mindestens einen Schnelltaste (1, 2, 3, 4) ändert, das beim Drücken eine von mehreren vorkonfigurierten Funktionen eines Fahrzeugs aktiviert,
- Funktionsmodus: Durch Drücken der genannten mindestens einen Schnelltaste (1, 2, 3, 4) im Home-Menü-Modus wird die genannte vorkonfigurierte Fahrzeugfunktion aktiviert, wobei im Funktionsmodus das Logikmodul konfiguriert ist, um eine oder mehrere der vorkinfigurierte Fahrzeugsfunktionen zu steuern und/oder um eine oder mehrere der genannten vorkinfigurierten Fahrzeugsfunktionen anzupassen durch Drehen des mindestens einen genannten Drehgebers (5) im oder gegen den Uhrzeigersinn, wobei die genannte mindestens eine Anzeige dazu konfiguriert ist, von der Steuereinheit Informationen zu mindestens einem der folgenden Punkte zu empfangen und anzuzeigen: aktuelle Konfiguration der genannten mindestens einen Schnelltaste im Home-Menü-Modus; aktueller Status der aktivierten vorkonfigurierten Funktion des Fahrzeugs und/oder Anpassen und Ändern des Status der aktivierten vorkonfigurierten Funktion des Fahrzeugs durch Drehen des genannten mindestens einen Drehgebers (5) im Funktionsmodus im oder gegen den Uhrzeigersinn.

2. Externes Fahrzeugsteuergerät gemäß Anspruch 1, **dadurch gekennzeichnet, dass** der Drehgeber (5) auch als Schnelltaste konfiguriert ist, wobei die Schnelltastenfunktion durch Drücken oder Ziehen des Drehgebers (5) aktiviert wird.

3. Externes Fahrzeugsteuergerät gemäß Ansprüchen 1 oder 2, **dadurch gekennzeichnet, dass** die Steuereinheit über Bluetooth- und/oder WLAN-Konnektivität verfügt.

4. Externes Fahrzeugsteuergerät gemäß Ansprüchen 1, 2 oder 3, **dadurch gekennzeichnet, dass** es ein mit der Steuereinheit verbundenes haptisches Feedbackmodul umfasst, wobei das Steuerlogikmodul so konfiguriert ist, dass es das haptische Feedbackmodul bei Auftreten eines vorbestimmten Ereignisses aktiviert.

5. Externes Fahrzeugsteuergerät gemäß einem der vorhergehenden Ansprüche, **dadurch gekennzeichnet, dass** das Gerät einen Drehgeber (5) mit einem zentral im Drehgeber (5) angeordneten OLED-Display (6) und vier um den Drehgeber (5) angeordnete Shortcut-Tasten (1, 2, 3, 4) umfasst.

6. Externes Fahrzeugsteuergerät gemäß einem der vorhergehenden Ansprüche, **dadurch gekennzeichnet, dass** das Fahrzeug ein Pkw-Fahrzeug ist.

7. Fahrzeugsteuerungssystem, umfassend:
- eine zentrale Steuereinheit des Fahrzeugs, konfiguriert, um Befehle zu überwachen und diese in ein entsprechendes Steuermodul oder einen Aktuator eines Fahrzeugsystems zu übersetzen;
- ein Fahrzeugnetzwerk, das die Kommunikation zwischen der zentralen Steuereinheit und den genannten Steuermodulen oder Aktuatoren der Fahrzeugsysteme ermöglicht und diese miteinander verbindet;
- mehrere Fahrzeugsysteme, die von der zentralen Steuereinheit des Fahrzeugs gesteuert werden, genannte Fahrzeugsysteme verfügen über Steuermodule oder Aktuatoren, konfiguriert, um die über das Fahrzeugnetzwerk Befehle von der zentralen Steuereinheit zu empfangen, um verschiedene Fahrzeugfunktionen entsprechend zu aktivieren, zu bewegen oder zu ändern;
- ein externes Steuergerät gemäß einem der Ansprüche 1 bis 6, das mit der Steuereinheit des Fahrzeugs verbunden und so konfiguriert ist, dass es Informationen von der zentralen Steuereinheit empfängt und Steuersignale/Befehle an die zentralen Steuereinheit sendet, um die genannten Fahrzeugsysteme zu steuern.

## Revendications

1. Dispositif de commande externe de véhicule comprenant un boîtier (1) doté d'au moins un encodeur rotatif (5), d'au moins un écran (6), d'au moins un bouton de raccourci (1, 2, 3, 4), d'une unité de commande dotée d'un module logique de commande et d'un module d'alimentation, dans lequel chaque bouton de raccourci (1, 2, 3, 4) est configuré pour activer une fonction préconfigurée du véhicule lorsqu'il est enfoncé, et le module logique de l'unité de commande est configuré pour faire fonctionner le dispositif selon deux modes :
- Mode Menu d'accueil dans lequel le module logique est configuré lors de la rotation dudit au moins un encodeur rotatif (5) pour modifier la fonctionnalité dudit au moins un bouton de raccourci (1, 2, 3, 4) qui active l'une des multiples fonctionnalités préconfigurées d'un véhicule lorsqu'il est enfoncé,
- Mode Fonction à activer en appuyant sur ledit au moins un bouton de raccourci (1, 2, 3, 4) dans le Mode Menu d'accueil pour activer ladite fonctionnalité préconfigurée du véhicule, dans lequel, dans le Mode Fonction, le module logique est configuré pour contrôler une ou plusieurs des fonctionnalités préconfigurées du véhicule et/ou pour ajuster ladite ou lesdites fonctionnalités préconfigurées du véhicule lors d'une rotation dans le sens horaire ou antihoraire dudit au moins un encodeur rotatif,
dans lequel ledit au moins un écran est configuré pour recevoir de l'unité de commande et afficher des informations pour au moins l'un des éléments suivants : la configuration actuelle dudit au moins un bouton de raccourci en Mode Menu d'accueil ; l'état actuel de la fonctionnalité préconfigurée activée du véhicule et/ou le réglage et la modification de l'état de la fonctionnalité préconfigurée activée de la voiture en tournant dans le sens horaire ou antihoraire ledit au moins un encodeur rotatif (5) en Mode Fonction.

2. Dispositif de commande externe de véhicule selon la revendication 1, **caractérisé en ce que** l'encodeur rotatif (5) est également configuré comme bouton de raccourci, la fonction de raccourci étant activée par pression ou traction sur l'encodeur rotatif (5).

3. Dispositif de commande externe de véhicule selon la revendication 1 ou 2, **caractérisé en ce que** l'unité de commande comprend des moyens de connectivité Bluetooth et/ou WiFi.

4. Dispositif de commande externe de véhicule selon les revendications 1, 2 ou 3, **caractérisé en ce qu'**il comprend en outre un module de retour haptique connecté à l'unité de commande, le module logique de commande étant configuré pour activer le module de retour haptique lors d'une occurrence d'un événement prédéterminé.

5. Dispositif de commande externe de véhicule selon l'une quelconque des revendications précédentes, **caractérisé en ce qu'**il comporte un encodeur rotatif (5) associé à un écran OLED (6) disposé au centre de l'encodeur rotatif (5), et quatre boutons de raccourci (1, 2, 3, 4) disposés autour de l'encodeur rotatif (5).

6. Dispositif de commande externe de véhicule selon l'une quelconque des revendications précédentes, **caractérisé en ce que** le véhicule est une voiture.

7. Système de contrôle du véhicule comprenant :
- une unité de commande centrale du véhicule, configurée pour surveiller les commandes et les traduire vers un module de commande ou un actionneur correspondant d'un système du véhicule ;
- un réseau du véhicule qui permet la communication entre l'unité de commande centrale et lesdits modules de commande ou actionneurs des systèmes du véhicule et les relie entre eux ;
- une pluralité de systèmes de véhicule contrôlés par l'unité de commande centrale du véhicule, lesdits systèmes de véhicule ayant des modules de commande ou des actionneurs configurés pour recevoir des commandes de l'unité de commande centrale via le réseau du véhicule pour activer, déplacer ou modifier différentes fonctionnalités du véhicule en conséquence ;
- un dispositif de commande externe selon l'une quelconque des revendications 1 à 6, connecté à l'unité de commande du véhicule et configuré pour recevoir des informations et envoyer des signaux/commandes de commande à l'unité de commande centrale pour commander lesdits systèmes du véhicule.
